# EUROPÄISCHE PATENTSCHRIFT

(11) **EP 3 206 898 B1**
(45) Veröffentlichungstag und Bekanntmachung des Hinweises auf die Patenterteilung: **20.06.2018**
(21) Anmeldenummer: 15762644.1
(22) Anmeldetag: 15.09.2015
(51) Int. Cl.: B60G 21/055, B60G 11/10, B60G 7/00, B62D 33/06

(54) **VERBINDUNGSANORDNUNG FÜR EINEN STABILISATOR EINES FAHRZEUGS**
CONNECTING ARRANGEMENT FOR A STABILIZER OF A VEHICLE
SYSTÈME DE LIAISON POUR STABILISATEUR D'UN VÉHICULE

(30) Priorität: 17.10.2014 DE 102014221141
(43) Veröffentlichungstag der Anmeldung: 23.08.2017
(73) Patentinhaber: ZF Friedrichshafen AG, 88046 Friedrichshafen (DE)
(72) Erfinder: EISMANN, Jens, 49326 Melle (DE); RATERMANN, Wolfgang, 49163 Bohmte (DE); LANGHORST, Friedhelm, 49356 Diepholz (DE)
(86) Internationale Anmeldenummer: PCT/EP2015/070998
(87) Internationale Veröffentlichungsnummer: WO 2016/058765

(56) Entgegenhaltungen:
- WO-A1-2007/059747
- WO-A1-2012/059597
- CN-U- 203 126 446
- DE-A1- 3 636 878
- DE-A1- 4 342 809
- DE-A1-102008 049 940
- GB-A- 660 443
- JP-A- H1 120 450
- US-A- 2 169 850
- US-A- 2 588 018
- US-A1- 2010 207 372

## Beschreibung

Die Erfindung betrifft eine Verbindungsanordnung für einen Stabilisator eines Fahrzeugs, mit einem sich quer zu einer Längsrichtung erstreckenden Hebel, der ein mit einer unrunden Innenumfangskontur versehenes Lagerauge umfasst, und einer sich mit ihrer Drehachse in Längsrichtung erstreckenden Drehstabfeder, die an zumindest einem Ende mit einer an die Innenumfangskontur des Lagerauges angepassten unrunden Außenumfangskontur versehen ist und mit dieser in dem Lagerauge sitzt.

Jedes der Dokumente DE 43 42 809 A, WO 2007/059747 A, DE 23 03 206 A, DE 14 55 649 A, US 2 588 018 A, US 1 439 005 A offenbart eine relevante Verbindungsanordnung für einen Stabilisator eines Fahrzeugs.

Die DE 10 2008 049 940 A1 offenbart eine Verbindungseinrichtung zur drehmomentübertragenden Anbindung eines Anschlussbauteils an einer Hohlwelle, welches eine zu einem Außenquerschnitt der Hohlwelle formkorrespondierende, durchgehende Ausnehmung zur Aufnahme eines Endes der Hohlwelle umfasst, wobei die Hohlwelle im Verbindungsbereich von Hohlwelle und Anschlussbauteil einen Pressstopfen enthält, der mit dem Innenquerschnitt der Hohlwelle zumindest bereichsweise eine Presspassung bildet und als Lageraufnahme für zumindest eine der Hohlwelle zugeordnete Lagerung ausgebildet ist. Der Pressstopfen presst die Rohrwandung an die Innenoberfläche der Ausnehmung des Anschlussbauteils an, sodass sich auch zwischen der äußeren Oberfläche der Hohlwelle und der Innenoberfläche der Ausnehmung des Anschlussbauteils eine Presspassung ergibt. Bei dieser Verbindungseinrichtung ist die Hohlwelle unlösbar in das Anschlussbauteil eingepresst. Ist z.B. ein Fahrerhausstabilisator mit dieser Verbindungseinrichtung ausgestattet, kann sich der Nachteil ergeben, dass im Wartungsfall der ganze Stabilisator demontiert werden muss, beispielsweise zur Wartung des Kühlers. Ferner sind zur Herstellung dieser Verbindungseinrichtung nicht unerhebliche Investitionen für die Anschaffung von Maschinen erforderlich, sodass sich relativ hohe Kosten bei geringen Stückzahlen ergeben.

Ausgehend hiervon liegt der Erfindung die Aufgabe zugrunde, eine Verbindungsanordnung der eingangs genannten Art derart weiterzubilden, dass im Wartungsfalle eines mit der Verbindungsanordnung ausgestatteten Stabilisators in der Regel nicht der gesamte Stabilisator demontiert werden muss.

Diese Aufgabe wird durch eine Verbindungsanordnung nach Anspruch 1 gelöst. Bevorzugte Weiterbildungen der Verbindungsanordnung sind in den Unteransprüchen und in der nachfolgenden Beschreibung gegeben.

Die Verbindungsanordnung für einen Stabilisator eines Fahrzeugs, insbesondere für einen Fahrerhausstabilisator eines Fahrzeugs, weist einen oder wenigstens einen sich quer zu einer Längsrichtung erstreckenden Hebel, der ein mit einer unrunden Innenumfangskontur versehenes Lagerauge umfasst, und eine sich mit ihrer Drehachse in Längsrichtung erstreckende Drehstabfeder auf, die an zumindest einem Ende mit einer an die Innenumfangskontur des Lagerauges angepassten unrunden Außenumfangskontur versehen ist und mit dieser in dem Lagerauge sitzt, wobei die Wandung des Lagerauges von wenigstens einem in Längsrichtung verlaufenden Schlitz durchsetzt ist, durch welchen zwei einander gegenüberliegende Wandungsabschnitte der Wandung voneinander getrennt sind, die durch ein oder wenigstens ein lösbares Klemmmittel gegen die unrunde Außenumfangskontur der Drehstabfeder gepresst sind.

Durch das Unterteilen der Wandung in zwei einander gegenüberliegende Wandungsabschnitte, die durch einen Schlitz voneinander getrennt sind, ist es durch Lösen des Klemmmittels auf einfache Weise möglich, die Drehstabfeder aus dem Lagerauge herauszunehmen, da die Wandungsabschnitte aufgrund des Schlitzes bei gelöstem Klemmmittel zumindest geringfügig auseinander bewegbar sind. Bei einem mit der Verbindungsanordnung ausgestatteten Stabilisator können somit die Drehstabfeder und der Hebel voneinander getrennt werden, sodass im Wartungsfalle nicht der gesamte Stabilisator demontiert werden muss.

Bei der Verbindungsanordnung ist der im Stand der Technik übliche Längspressverband durch einen Querpressverband ersetzt, wobei die Presskräfte durch das Klemmmittel aufgebracht werden. Da die unrunde Ausgestaltung der Umfangsflächen eine Drehmomentübertragung zwischen der Drehstabfeder und dem Hebel unterstützt, ist das Klemmmittel z.B. mittels herkömmlicher Schrauben realisierbar, sodass zur Ausbildung des Querpressverbands keine teuren Maschinen, wie z.B. Pressen, erforderlich sind. Ferner kann bei dem Querpressverband ein höherer Haftbeiwert als bei einem entsprechenden Längspressverband erzielt werden (z.B. µ=0,1 anstatt µ=0,06), sodass höhere Belastungen übertragen werden können und der Schlupf sinkt.

Bei der Wandung handelt es sich insbesondere um eine das Lagerauge begrenzende Wandung des Hebels. Bevorzugt erstrecken sich die Wandungsabschnitte jeweils von dem Schlitz bis zu einem dem Schlitz bezüglich der Drehachse gegenüberliegenden oder diametral gegenüberliegenden Bereich der Wandung oder Ort.

Der Hebel erstreckt sich vorzugsweise senkrecht zur Drehachse. Bevorzugt durchsetzt der Schlitz die Wandung in einer radial zur Drehachse verlaufenden Richtung. Insbesondere sind die Wandungsabschnitte durch das Klemmmittel bezüglich der Drehachse radial gegen die Außenumfangskontur der Drehstabfeder gepresst. Somit ist es möglich, die Presskräfte möglichst gleichmäßig über den Umfang der Drehstabfeder im Bereich ihres in das Lagerauge eingesetzten Endes zu verteilen.

Das Klemmmittel kann auf unterschiedliche Arten und Weisen realisiert werden. Insbesondere greift das Klemmmittel im Bereich des Schlitzes an den Wandungsabschnitten an. Vorzugsweise sind die Wandungsabschnitte durch das Klemmmittel zusammengedrückt und/oder auf einander zu gedrückt, insbesondere im Bereich des Schlitzes. Durch das Zusammendrücken und/oder Aufeinanderzudrücken der Wandungsabschnitte durch das Klemmmittel sind die Wandungsabschnitte insbesondere gegen die unrunde Außenumfangskontur der Drehstabfeder gepresst.

Gemäß einer Ausgestaltung sind die beiden Wandungsabschnitte durch das Klemmmittel miteinander verschraubt. Bevorzugt umfasst das Klemmmittel wenigstens eine Schraube, mittels welcher die beiden Wandungsabschnitte miteinander verschraubt und/oder zusammengedrückt und/oder auf einander zu gedrückt sind. Durch das Miteinanderverschrauben und/oder das Zusammendrücken und/oder das Aufeinanderzudrücken der Wandungsabschnitte durch das Klemmmittel und/oder mittels der Schraube sind die Wandungsabschnitte insbesondere gegen die unrunde Außenumfangskontur der Drehstabfeder gepresst. Vorzugsweise verläuft die Schraube quer zur Längsrichtung. Bevorzugt ist die Schraube im Abstand zur Drehachse angeordnet. Vorteilhaft erstreckt sich die Schraube durch den Schlitz hindurch. Insbesondere sind die Wandungsabschnitte im Bereich des Schlitzes durch das Klemmmittel und/oder mittels der Schraube miteinander verschraubt und/oder zusammengedrückt und/oder auf einander zu gedrückt. Hierdurch ist eine kostengünstige Möglichkeit zur Ausbildung des Klemmmittels geschaffen. Insbesondere ist das Klemmmittel durch Lösen der Schraube lösbar. Bevorzugt ist das Klemmmittel durch die Schraube gebildet.

Gemäß einer Weiterbildung erstreckt sich die Schraube durch einen ersten der Wandungsabschnitte hindurch und ist in den zweiten Wandungsabschnitt eingeschraubt. Dabei ist insbesondere ein Schraubenkopf der Schraube an einer dem zweiten Wandungsabschnitt abgewandten Anlagefläche des ersten Wandungsabschnitts abgestützt und/oder liegt an dieser an. Bevorzugt ist der erste Wandungsabschnitt mit wenigstens einem Durchgangsloch versehen, durch welches sich die Schraube hindurch erstreckt. Vorzugsweise ist die Schraube in ein in dem zweiten Wandungsabschnitt vorgesehenes Loch eingeschraubt, welches insbesondere mit einem Gewinde versehen ist. Dieses Gewinde ist bevorzugt ein Innengewinde. Die Schraube weist vorzugsweise ein Außengewinde auf.

In den Schlitz ist bevorzugt eine Dichtung eingesetzt, die beispielsweise aus Kunststoff besteht. Hierdurch kann ein Eindringen von Schmutz und Feuchtigkeit in den Bereich des Querpressverbands verhindert werden. Bevorzugt erstreckt sich die Schraube durch die Dichtung hindurch.

Gemäß einer ersten Variante ist die Wandung einstückig ausgebildet, sodass die Wandungsabschnitte ineinander übergehen. Bevorzugt gehen die Wandungsabschnitte dabei materialhomogen ineinander über. Vorzugsweise gehen die Wandungsabschnitte in einem dem Schlitz bezüglich der Drehachse gegenüberliegenden oder diametral gegenüberliegenden Bereich der Wandung oder Ort ineinander über. Bei gelöstem Klemmmittel und/oder beim Lösen des Klemmmittels können sich die Wandungsabschnitte somit geringfügig auseinander bewegen. Insbesondere können sich die Wandungsabschnitte bei gelöstem Klemmmittel und/oder beim Lösen des Klemmmittels federnd relativ zueinander bewegen. Ein Vorteil der ersten Variante ist, dass die beiden Wandungsabschnitte bei gelöstem Klemmmittel verliersicher miteinander verbunden sind.

Gemäß einer zweiten Variante ist die Wandung von zwei oder wenigstens zwei in Längsrichtung verlaufenden Schlitzen durchsetzt, durch welche die Wandungsabschnitte voneinander getrennt sind, sodass die Wandungsabschnitte separate Bauteile bilden. Bevorzugt können in diesem Fall die beiden Wandungsabschnitte bei gelöstem oder vollständig gelöstem Klemmmittel sogar vollständig voneinander separiert werden. Dies ist mit dem Vorteil verbunden, dass das Lagerauge seitlich geöffnet werden kann, sodass die Drehstabfeder seitlich aus dem Lagerauge herausnehmbar ist. Unter "seitlich" ist hier insbesondere eine Richtung quer zur Längsrichtung und/oder zur Drehachse zu verstehen. Insbesondere liegen die Schlitze bezüglich der Drehachse einander gegenüber oder diametral gegenüber. Bevorzugt durchsetzen die Schlitze die Wandung an bezüglich der Drehachse einander gegenüberliegenden oder diametral gegenüberliegenden Bereichen oder Orten.

Das Klemmmittel greift insbesondere im Bereich der Schlitze an den Wandungsabschnitten an. Vorteilhaft sind die Wandungsabschnitte durch das Klemmmittel zusammengedrückt und/oder auf einander zu gedrückt, insbesondere im Bereich der Schlitze. Durch das Zusammendrücken und/oder Aufeinanderzudrücken der Wandungsabschnitte durch das Klemmmittel sind die Wandungsabschnitte insbesondere gegen die unrunde Außenumfangskontur der Drehstabfeder gepresst.

Gemäß einer Ausgestaltung sind die beiden Wandungsabschnitte durch das Klemmmittel miteinander verschraubt. Bevorzugt umfasst das Klemmmittel wenigstens zwei Schrauben, mittels welchen die beiden Wandungsabschnitte miteinander verschraubt und/oder zusammengedrückt und/oder auf einander zu gedrückt sind. Durch das Miteinanderverschrauben und/oder das Zusammendrücken und/oder das Aufeinanderzudrücken der Wandungsabschnitte durch das Klemmmittel und/oder mittels der Schrauben sind die Wandungsabschnitte insbesondere gegen die unrunde Außenumfangskontur der Drehstabfeder gepresst. Vorzugsweise verlaufen die Schrauben quer zur Längsrichtung. Insbesondere sind die Schrauben im Abstand zur Drehachse angeordnet. Beispielsweise sind die Schrauben bezüglich der Drehachse einander gegenüberliegend oder diametral gegenüberliegend angeordnet. Bevorzugt verlaufen die Schrauben parallel zueinander. Vorteilhaft erstrecken sich die Schrauben durch die Schlitze hindurch. Insbesondere erstreckt sich jede der Schrauben durch einen der Schlitze hindurch. Bevorzugt sind die Wandungsabschnitte im Bereich der Schlitze durch das Klemmmittel und/oder mittels der Schrauben miteinander verschraubt und/oder zusammengedrückt und/oder auf einander zu gedrückt. Insbesondere ist das Klemmmittel durch Lösen der Schrauben lösbar. Bevorzugt ist das Klemmmittel durch die Schrauben gebildet.

Gemäß einer Weiterbildung erstrecken sich die Schrauben durch den ersten Wandungsabschnitt hindurch und sind in den zweiten Wandungsabschnitt eingeschraubt. Dabei sind insbesondere die Schraubenköpfe der Schrauben an einer oder jeweils einer dem zweiten Wandungsabschnitt abgewandten Anlagefläche des ersten Wandungsabschnitts abgestützt und/oder liegen an dieser an. Bevorzugt ist der erste Wandungsabschnitt mit wenigstens zwei Durchgangslöchern versehen, durch welche sich die Schrauben hindurch erstrecken. Vorzugsweise sind die Schrauben in Löcher eingeschraubt, die in dem zweiten Wandungsabschnitt vorgesehen und insbesondere mit Gewinden versehen sind. Diese Gewinde sind bevorzugt Innengewinde. Die Schrauben weisen vorzugsweise Außengewinde auf.

Gemäß einer Ausgestaltung liegen die Schlitze in einer in Längsrichtung verlaufenden Ebene, in der vorzugsweise auch die Drehachse liegt. Bevorzugt durchsetzen die Schlitze die Wandung jeweils in einer radial zur Drehachse verlaufenden Richtung. Somit ist es möglich, die Presskräfte möglichst gleichmäßig über den Umfang der Drehstabfeder im Bereich ihres in das Lagerauge eingesetzten Endes zu verteilen.

Die unrunden Konturen bilden bevorzugt jeweils eine polygonale Kontur, beispielsweise eine dreieckige Kontur. Die Ecken der polygonalen Konturen sind dabei vorzugsweise abgerundet. Ferner können die Seiten der polygonalen Konturen z.B. gekrümmt verlaufen. Alternativ können die unrunden Konturen beispielsweise aber auch jeweils durch eine ovale Kontur gebildet sein.

Die Drehstabfeder ist vorzugsweise torsionsweich und/oder biegesteif. Beispielsweise kann die Drehstabfeder aus Vollmaterial bestehen. Bevorzugt ist die Drehstabfeder aber als Rohr ausgebildet. Somit kann Gewicht eingespart werden. Ferner ist die Drehstabfeder im Bereich ihres mit der unrunden Außenkontur versehenen Endes vorzugsweise aufgeweitet. Bevorzugt ist in das mit der unrunden Außenkontur versehene Ende ein Stopfen in die Drehstabfeder eingesetzt. Der Stopfen wirkt insbesondere den durch die Wandungsabschnitte auf die unrunde Außenkontur der Drehstabfeder ausgeübten Presskräften entgegen, sodass z.B. eine Verformung der Drehstabfeder im Bereich des Lagerauges aufgrund der Presskräfte verhindert werden kann. Vorteilhaft ist der Stopfen als Lager, als Teil eines Lagers oder als Aufnahme für ein Lager ausgebildet, mittels welchem die Drehstabfeder z.B. an einem Teil des oder eines Fahrzeuges, wie beispielsweise an einem Fahrzeugrahmen oder an einem Fahrerhaus, gelagert oder lagerbar ist. Die Drehstabfeder besteht bevorzugt aus Metall, insbesondere aus Stahl oder Federstahl. Ferner besteht der Hebel bevorzugt aus Metall, insbesondere aus Aluminium oder aus Eisenwerkstoff, wie z.B. Stahl. Vorzugsweise besteht der Hebel aus Guss, wie z.B. aus Aluminiumguss oder aus Guss aus Eisenwerkstoff.

Gemäß einer Weiterbildung umfasst die Verbindungsanordnung zwei sich quer zur Längsrichtung erstreckende Hebel, die jeweils ein mit einer unrunden Innenumfangskontur versehenes Lagerauge umfassen, wobei die Drehstabfeder an ihren Enden mit an die Innenumfangskonturen der Lageraugen angepassten unrunden Außenumfangskonturen versehen ist und mit diesen in den Lageraugen sitzt, sodass sich die Drehstabfeder in Längsrichtung zwischen den Hebeln erstreckt. Dabei ist die Wandung jedes Lagerauges von wenigstens einem in Längsrichtung verlaufenden Schlitz durchsetzt, durch welchen zwei einander gegenüberliegende Wandungsabschnitte der Wandung voneinander getrennt sind, die durch ein oder wenigstens ein lösbares Klemmmittel gegen die jeweilige oder zugehörige unrunde Außenumfangskontur der Drehstabfeder gepresst sind. Die Verbindungen zwischen der Drehstabfeder und den Hebeln können jeweils, wie zuvor beschrieben, weitergebildet sein.

Bei den Wandungen handelt es sich insbesondere jeweils um eine das jeweilige Lagerauge begrenzende Wandung des jeweiligen Hebels. Die Hebel bestehen bevorzugt aus Metall, insbesondere aus Aluminium oder aus Eisenwerkstoff, wie z.B. Stahl. Vorzugsweise bestehen die Hebel aus Guss, wie z.B. aus Aluminiumguss oder aus Guss aus Eisenwerkstoff.

Bevorzugt bildet die Verbindungsanordnung einen Stabilisator oder einen Teil eines Stabilisators für ein oder das Fahrzeug, wobei der Stabilisator insbesondere ein Fahrerhausstabilisator ist.

Gemäß einer Ausgestaltung ist die Drehstabfeder an einer ersten Fahrzeugkomponente gelagert, wobei der oder die Hebel, insbesondere im Abstand zur Drehstabfeder, an einer zweiten Fahrzeugkomponente gelagert ist oder sind. Vorzugsweise ist eine der Fahrzeugkomponenten durch ein Fahrerhaus gebildet, wobei die andere der Fahrzeugkomponenten durch einen Fahrzeugrahmen gebildet ist. Das Fahrerhaus ist somit bevorzugt mittels der Verbindungsanordnung mit dem Fahrzeugrahmen verbunden. Das Fahrerhaus und der Fahrzeugrahmen bilden insbesondere Komponenten des oder eines Fahrzeugs.

Die Erfindung betrifft ferner die Verwendung der zuvor beschriebenen Verbindungsanordnung für ein einen Fahrzeugrahmen und ein an diesem gelagertes Fahrerhaus umfassendes Fahrzeug und/oder für einen Fahrerhausstabilisator eines solchen Fahrzeugs. Bevorzugt ist das Fahrerhaus mittels der Verbindungsanordnung und/oder des Fahrerhausstabilisators mit dem Fahrzeugrahmen verbunden. Insbesondere bilden das Fahrerhaus und der Fahrzeugrahmen Fahrzeugkomponenten des Fahrzeugs, wobei die Drehstabfeder an einer der Fahrzeugkomponenten gelagert ist und der oder die Hebel, insbesondere im Abstand zur Drehstabfeder, an der anderen Fahrzeugkomponente gelagert ist oder sind. Beispielsweise ist die Drehstabfeder an dem Fahrerhaus gelagert, wobei der oder die Hebel im Abstand zur Drehstabfeder an dem Fahrzeugrahmen gelagert ist oder sind.

Die Erfindung wird nachfolgend anhand bevorzugter Ausführungsformen unter Bezugnahme auf die Zeichnung beschrieben. In der Zeichnung zeigen:
Fig. 1 eine perspektivische Ansicht eines Fahrerhausstabilisators, bei dem zwei unterschiedliche Ausführungsformen der Erfindung verwirklicht sind,
Fig. 2 eine Seitenansicht eines Hebels des Fahrerhausstabilisators,
Fig. 3 eine Seitenansicht eines anderen Hebels des Fahrerhausstabilisators und
Fig. 4 eine Explosionsdarstellung eines den anderen Hebel umfassenden Teils des Fahrerhausstabilisators.

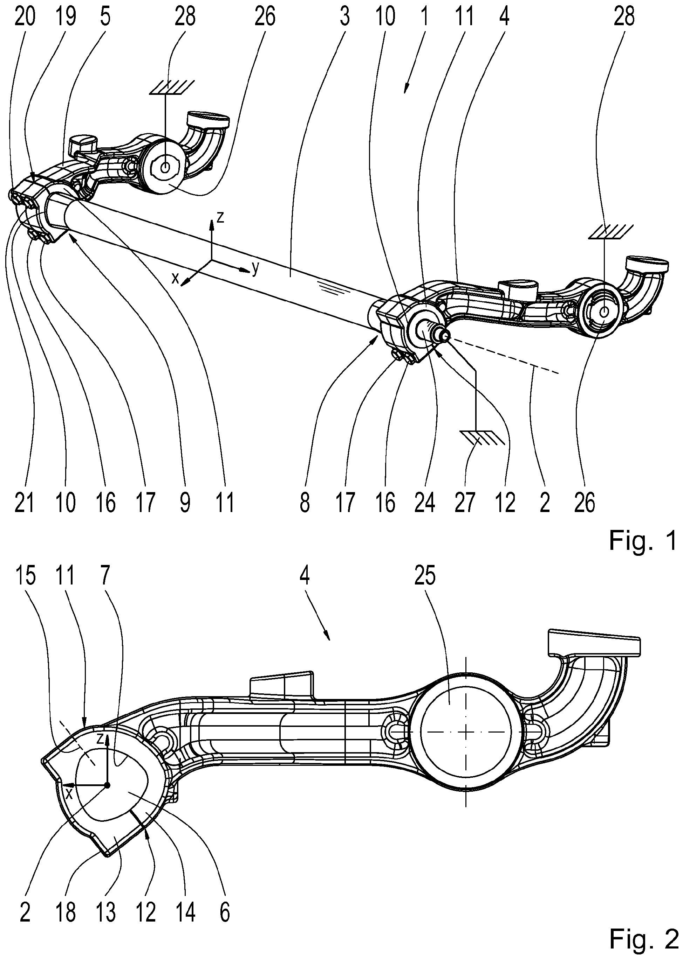

Aus Fig. 1 ist eine perspektivische Ansicht eines Fahrerhausstabilisators 1 ersichtlich, der eine sich mit ihrer Drehachse 2 in einer Längsrichtung y erstreckende Drehstabfeder 3 und zwei mit dieser verbundene Hebel 4 und 5 umfasst, die sich quer zur Drehachse 2 von der Drehstabfeder 3 wegerstrecken. Zur leichteren Orientierung sind zusätzlich zur Längsrichtung y die Richtungen x und z gezeigt, wobei die Richtungen x, y und z in dieser Reihenfolge ein Rechtssystem bilden. In einem in einem Fahrzeug eingebauten Zustand des Stabilisators 1 bildet die Richtung x vorzugsweise eine Fahrzeuglängsrichtung des Fahrzeugs, die Richtung y vorzugsweise eine Fahrzeugquerrichtung des Fahrzeugs und die Richtung z vorzugsweise eine Fahrzeughochrichtung des Fahrzeugs. Der Ausdruck "Längsrichtung" für die Richtung "y" bezieht sich somit insbesondere auf die Richtung der Längserstreckung der Drehstabfeder 3 des Stabilisators 1.

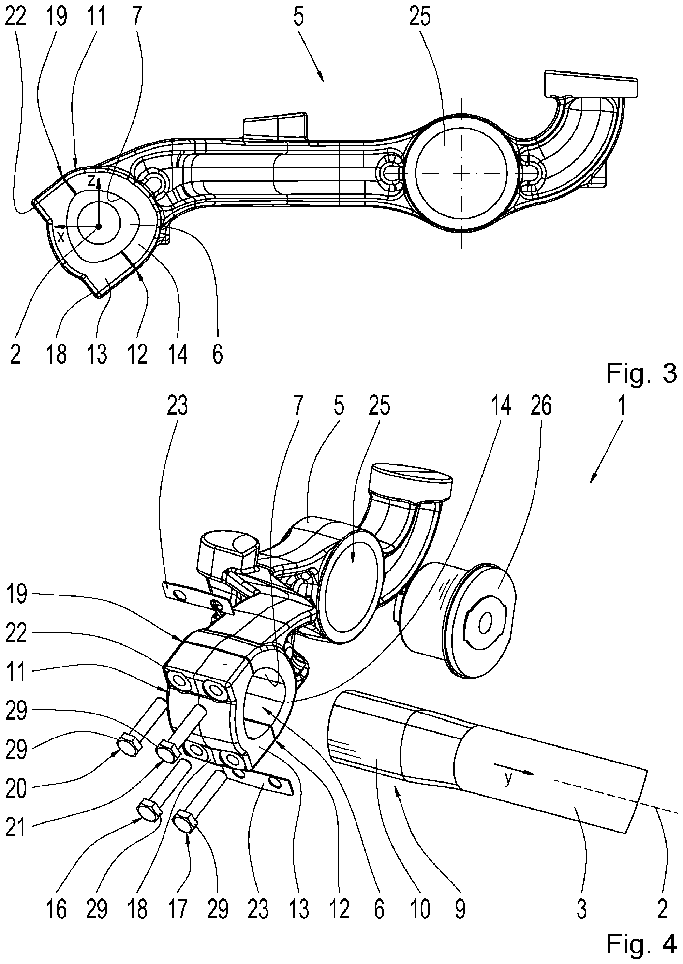

Die Hebel 4 und 5 weisen jeweils ein Lagerauge 6 auf, welches mit einer unrunden Innenumfangskontur 7 versehen ist. Dies geht am deutlichsten aus den Fig. 2 und 3 hervor, die Seitenansichten der Hebel 4 und 5 in Einzeldarstellung zeigen. Die beiden Enden 8 und 9 der Drehstabfeder 3 sind jeweils mit einer an die Innenumfangskontur 7 angepassten unrunden Außenumfangskontur 10 versehen, wobei die Drehstabfeder 3 mit ihrem Ende 8 in dem Lagerauge 6 des Hebels 4 und mit ihrem Ende 9 in dem Lagerauge 6 des Hebels 5 sitzt, sodass die Drehstabfeder 3 mit ihrem Ende 8 drehstarr mit dem Hebel 4 und mit ihrem Ende 9 drehstarr mit dem Hebel 5 verbunden ist. Die unrunden Konturen 7 und 10 sind dabei näherungsweise dreieckig.

Die Verbindung des Hebels 4 mit der Drehstabfeder 3 verwirklicht eine erste Ausführungsform einer Verbindungsanordnung, und die Verbindung des Hebels 5 mit der Drehstabfeder 3 verwirklicht eine zweite Ausführungsform einer Verbindungsanordnung. Dabei werden für identische und/oder funktionsgleiche und/oder ähnliche Merkmale beider Ausführungsformen insbesondere dieselben Bezugszeichen verwendet.

Der Hebel 4 umfasst eine sein Lagerauge 6 begrenzende Wandung 11, die von einem sich in Längsrichtung y erstreckenden Schlitz 12 in einer bezüglich der Drehachse 2 radialen Richtung durchsetzt ist. Dieser Schlitz 12 trennt zwei Wandungsabschnitte 13 und 14 der Wandung 11 voneinander, die in einem dem Schlitz 12 bezüglich der Drehachse 2 diametral gegenüberliegenden Bereich 15 der Wandung 11 ineinander übergehen. Durch den Wandungsabschnitt 13 und durch den Schlitz 12 erstrecken sich Schrauben 16 und 17 hindurch, die in den Wandungsabschnitt 14 eingeschraubt sind und mit ihren Schraubenköpfen an einer Anlagefläche 18 anliegen, die auf einer dem Wandungsabschnitt 14 abgewandten Seite des Wandungsabschnitts 13 vorgesehen ist. Die Schrauben 16 und 17 bilden ein Klemmmittel, durch welches die beiden Wandungsabschnitte 13 und 14 im Bereich des Schlitzes 12 auf einander zu gedrückt sind, sodass die Wandungsabschnitte 13 und 14 gegen die Außenumfangsfläche 10 des Endes 8 der Drehstabfeder 3 gepresst sind.

Der Hebel 5 umfasst ebenfalls eine sein Lagerauge 6 begrenzende Wandung 11, die von einem sich in Längsrichtung y erstreckenden Schlitz 12 in einer bezüglich der Drehachse 2 radialen Richtung durchsetzt ist. Allerdings ist die Wandung 11 des Hebels 5 zusätzlich von einem sich in Längsrichtung y erstreckenden Schlitz 19 in einer bezüglich der Drehachse 2 radialen Richtung durchsetzt, wobei die Schlitze 12 und 19 bezüglich der Drehachse 2 einander diametral gegenüberliegen. Die Schlitze 12 und 19 trennen zwei Wandungsabschnitte 13 und 14 der Wandung 11 voneinander, die bei dem Hebel 5 zwei voneinander getrennte Bauteile bilden. Durch den Wandungsabschnitt 13 und durch den Schlitz 12 erstrecken sich Schrauben 16 und 17 hindurch, die in den Wandungsabschnitt 14 eingeschraubt sind und mit ihren Schraubenköpfen 29 an einer Anlagefläche 18 anliegen, die auf einer dem Wandungsabschnitt 14 abgewandten Seite des Wandungsabschnitts 13 vorgesehen ist. Ferner erstrecken sich durch den Wandungsabschnitt 13 und durch den Schlitz 19 Schrauben 20 und 21 hindurch, die in den Wandungsabschnitt 14 eingeschraubt sind und mit ihren Schraubenköpfen 29 an einer Anlagefläche 22 anliegen, die auf der dem Wandungsabschnitt 14 abgewandten Seite des Wandungsabschnitts 13 vorgesehen ist. Die Schrauben 16, 17, 20 und 21 bilden ein Klemmmittel, durch welches die beiden Wandungsabschnitte 13 und 14 im Bereich der Schlitze 12 und 19 auf einander zu gedrückt sind, sodass die Wandungsabschnitte 13 und 14 gegen die Außenumfangsfläche 10 des Endes 9 der Drehstabfeder 3 gepresst sind.

Aus Fig. 4 ist eine Explosionsdarstellung eines den Hebel 5 umfassenden Teils des Fahrerhausstabilisators 1 ersichtlich, wobei Dichtungen 23 gezeigt sind, die im zusammengebauten Zustand des Stabilisators 1 in die Schlitze 12 und 19 eingesetzt und von den jeweiligen Schrauben durchdrungen sind. Ferner ist gezeigt, dass die Drehstabfeder 3 im Bereich ihres Endes 9 aufgeweitet ist. Eine entsprechende Aufweitung ist im Bereich des Endes 8 vorgesehen.

Aus Fig. 1 ist weiterhin erkennbar, dass ein Stopfen 24 in das Ende 8 der als Rohr ausgebildeten Drehstabfeder 3 eingesetzt ist. Dieser Stopfen 24 dient einerseits dazu, den von den Wandungsabschnitten 13 und 14 auf die Außenumfangsfläche 10 des Endes 8 der Drehstabfeder 3 ausgeübten Presskräften entgegen zu wirken, sodass eine Verformung des Endes 8 aufgrund dieser Kräfte vermieden werden kann. Ferner bildet der Stopfen 24 insbesondere eine Aufnahme oder einen Teil eines Lagers, mittels welchem die Drehstabfeder 3 an einem lediglich schematisch angedeuteten Fahrerhaus 27 eines Fahrzeugs gelagert ist. In das Ende 9 der Drehstabfeder 3 ist ein entsprechender Stopfen eingesetzt, der ebenfalls eine Aufnahme oder einen Teil eines Lagers bildet, mittels welchem die Drehstabfeder 3 an dem Fahrerhaus 27 gelagert ist. Ferner umfassen die Hebel 4 und 5 zusätzliche Lageraugen 25, in welche Lager 26 eingesetzt sind, mittels welchen die Hebel 4 und 5 an einem lediglich schematisch angedeuteten Fahrzeugrahmen 28 des Fahrzeugs gelagert sind. Alternativ kann die Drehstabfeder 3 aber auch am Fahrzeugrahmen 28 gelagert sein, sodass die Hebel 4 und 5 mit ihren zusätzlichen Lageraugen 25 und/oder mit den darin eingesetzten Lagern am Fahrerhaus 27 gelagert sind.

Obwohl bei dem gezeigten Stabilisator 1 zwei Ausführungsformen verwirklicht sind, ist dies nicht einschränkend zu verstehen. Selbstverständlich ist es möglich, den Hebel 5 mit lediglich einem Schlitz zu versehen und auf die gleiche Weise wie den Hebel 4 mit der Drehstabfeder 3 zu verbinden. Alternativ ist es möglich, den Hebel 4 mit zwei Schlitzen zu versehen und auf die gleiche Weise wie den Hebel 5 mit der Drehstabfeder 3 zu verbinden.

### Bezugszeichen

- 1: Stabilisator
- 2: Drehachse
- 3: Drehstabfeder
- 4: Hebel
- 5: Hebel
- 6: Lagerauge
- 7: Innenumfangskontur des Lagerauges
- 8: Ende der Drehstabfeder
- 9: Ende der Drehstabfeder
- 10: Außenumfangskontur
- 11: Wandung
- 12: Schlitz
- 13: Wandungsabschnitt
- 14: Wandungsabschnitt
- 15: Übergangsbereich
- 16: Schraube
- 17: Schraube
- 18: Anlagefläche
- 19: Schlitz
- 20: Schraube
- 21: Schraube
- 22: Anlagefläche
- 23: Dichtung
- 24: Stopfen
- 25: Lagerauge
- 26: Lager
- 27: Fahrerhaus
- 28: Fahrzeugrahmen
- 29: Schraubenkopf
- x: Richtung
- y: Längsrichtung
- z: Richtung

## Patentansprüche

1. Verbindungsanordnung für einen Fahrerhausstabilisator eines Fahrzeugs, mit zwei sich quer zu einer Längsrichtung (y) erstreckenden Hebeln (4, 5), die jeweils ein mit einer unrunden Innenumfangskontur (7) versehenes Lagerauge (6) umfassen, einer sich mit ihrer Drehachse (2) in Längsrichtung (y) erstreckenden Drehstabfeder (3), die an jedem ihrer zwei Enden (8, 9) mit einer an die Innenumfangskontur (7) des ihm zugeordneten Lagerauges (6) angepassten unrunden Außenumfangskontur (10) versehen ist und jeweils mit dieser in dem Lagerauge (6) sitzt, **dadurch gekennzeichnet, dass** die Wandungen (11) der Lageraugen (6) beider Hebel (4, 5) jeweils von wenigstens einem in Längsrichtung (y) verlaufenden Schlitz (12) durchsetzt sind, durch welchen jeweils zwei einander gegenüberliegende Wandungsabschnitte (13, 14) der Wandungen (11) voneinander getrennt sind, wobei die Wandungsabschnitte (13, 14) jeweils durch wenigstens ein lösbares Klemmmittel gegen die jeweilige unrunde Außenumfangskontur (10) der Drehstabfeder (3) gepresst sind.

2. Verbindungsanordnung nach Anspruch 1, **dadurch gekennzeichnet, dass** der Schlitz (12) die Wandung (11) jeweils in einer radial zur Drehachse (2) verlaufenden Richtung durchsetzt.

3. Verbindungsanordnung nach Anspruch 1 oder 2, **dadurch gekennzeichnet, dass** die Wandungsabschnitte (13, 14) jeweils durch das Klemmmittel bezüglich der Drehachse (2) radial gegen die Außenumfangskontur (10) der Drehstabfeder (3) gepresst sind.

4. Verbindungsanordnung nach einem der vorangehenden Ansprüche, **dadurch gekennzeichnet, dass** das Klemmmittel jeweils wenigstens eine quer zur Längsrichtung (y) verlaufende und im Abstand zur Drehachse (2) angeordnete Schraube (16) umfasst, mittels welcher die beiden Wandungsabschnitte (13, 14) miteinander verschraubt sind.

5. Verbindungsanordnung nach Anspruch 4, **dadurch gekennzeichnet, dass** sich die Schraube (16) jeweils durch einen ersten der Wandungsabschnitte (13) hindurch erstreckt und in den zweiten Wandungsabschnitt (14) eingeschraubt ist, wobei ein Schraubenkopf (29) der Schraube (16) an einer dem zweiten Wandungsabschnitt (14) abgewandten Anlagefläche (18) des ersten Wandungsabschnitts (13) abgestützt ist.

6. Verbindungsanordnung nach Anspruch 4 oder 5, **dadurch gekennzeichnet, dass** die Schraube (16) sich jeweils durch den Schlitz (12) hindurch erstreckt.

7. Verbindungsanordnung nach einem der vorangehenden Ansprüche, **dadurch gekennzeichnet, dass** die Wandung (11) jeweils einstückig ausgebildet ist, sodass die Wandungsabschnitte (13, 14) ineinander übergehen.

8. Verbindungsanordnung nach einem der Ansprüche 1 bis 6, **dadurch gekennzeichnet, dass** die Wandung (11) jeweils von wenigstens zwei in Längsrichtung (y) verlaufenden Schlitzen (12, 19) durchsetzt ist, durch welche die Wandungsabschnitte (13, 14) voneinander getrennt sind, sodass die Wandungsabschnitte (13,14) separate Bauteile bilden.

9. Verbindungsanordnung nach Anspruch 8, **dadurch gekennzeichnet, dass** das Klemmmittel jeweils wenigstens zwei quer zur Längsrichtung (y) verlaufende und im Abstand zur Drehachse (2) angeordnete Schrauben (16, 20) umfasst, mittels welchen die beiden Wandungsabschnitte (13, 14) miteinander verschraubt sind, wobei sich die Schrauben (16, 20) durch die Schlitze (12,19) hindurch erstrecken.

10. Verbindungsanordnung nach Anspruch 8 oder 9, **dadurch gekennzeichnet, dass** die Schlitze (12, 19) die Wandung (11) jeweils an bezüglich der Drehachse (2) einander gegenüberliegenden Orten durchsetzen.

11. Verbindungsanordnung nach einem der vorangehenden Ansprüche, **dadurch gekennzeichnet, dass** die unrunden Konturen (7, 10) jeweils eine polygonale Kontur bilden.

12. Verbindungsanordnung nach einem der vorangehenden Ansprüche, **dadurch gekennzeichnet, dass** die Drehstabfeder (3) als Rohr ausgebildet ist.

13. Verbindungsanordnung nach einem der vorangehenden Ansprüche, **dadurch gekennzeichnet, dass** die Drehstabfeder (3) an einer ersten Fahrzeugkomponente und die Hebel (4, 5) im Abstand zur Drehstabfeder (3) an einer zweiten Fahrzeugkomponente gelagert ist, wobei eine der Fahrzeugkomponenten durch ein Fahrerhaus (27) und die andere der Fahrzeugkomponenten durch einen Fahrzeugrahmen (28) gebildet ist.

## Claims

1. Connecting arrangement for a driver's cab stabilizer of a vehicle, having two levers (4, 5) which extend transversely with respect to a longitudinal direction (y) and which each comprise a bearing eye (6) equipped with a non-circular inner circumferential contour (7), having a torsion bar spring (3) which extends with its axis of rotation (2) in the longitudinal direction (y) and which, at each of its two ends (8, 9), is equipped with a non-circular outer circumferential contour (10) adapted to the inner circumferential contour (7) of the bearing eye (6) assigned thereto and is in each case seated by means of said non-circular outer circumferential contour in the bearing eye (6), **characterized in that** the walls (11) of the bearing eyes (6) of the two levers (4, 5) are each extended through by at least one slot (12) running in the longitudinal direction (y), by means of which slot in each case two mutually opposite wall sections (13, 14) of the walls (11) are separated from one another, wherein the wall sections (13, 14) are in each case pressed by at least one releasable clamping means against the respective non-circular outer circumferential contour (10) of the torsion bar spring (3).

2. Connecting arrangement according to Claim 1, **characterized in that** the slot (12) extends through the wall (11) in each case in a direction running radially with respect to the axis of rotation (2).

3. Connecting arrangement according to Claim 1 or 2, **characterized in that** the wall sections (13, 14) are in each case pressed by the clamping means radially, with respect to the axis of rotation (2), against the outer circumferential contour (10) of the torsion bar spring (3).

4. Connecting arrangement according to one of the preceding claims, **characterized in that** the clamping means comprises in each case at least one screw (16) which runs transversely with respect to the longitudinal direction (y) and which is arranged with a spacing to the axis of rotation (2) and by means of which the two wall sections (13, 14) are screwed together.

5. Connecting arrangement according to Claim 4, **characterized in that** the screw (16) extends in each case through a first of the wall sections (13) and is screwed into the second wall section (14), wherein a screw head (29) of the screw (16) is supported on an abutment surface (18), averted from the second wall section (14), of the first wall section (13).

6. Connecting arrangement according to Claim 4 or 5, **characterized in that** the screw (16) extends in each case through the slot (12).

7. Connecting arrangement according to one of the preceding claims, **characterized in that** the wall (11) is in each case of unipartite form, such that the wall sections (13, 14) transition into one another.

8. Connecting arrangement according to one of Claims 1 to 6, **characterized in that** the wall (11) is extended through in each case by at least two slots (12, 19) which run in the longitudinal direction (y) and by means of which the wall sections (13, 14) are separated from one another, such that the wall sections (13, 14) form separate components.

9. Connecting arrangement according to Claim 8, **characterized in that** the clamping means comprises in each case at least two screws (16, 20) which run transversely with respect to the longitudinal direction (y) and which are arranged with a spacing to the axis of rotation (2) and by means of which the two wall sections (13, 14) are screwed together, wherein the screws (16, 20) extend through the slots (12, 19).

10. Connecting arrangement according to Claim 8 or 9, **characterized in that** the slots (12, 19) extend through the wall (11) in each case at locations situated opposite one another in relation to the axis of rotation (2).

11. Connecting arrangement according to one of the preceding claims, **characterized in that** the non-circular contours (7, 10) each form a polygonal contour.

12. Connecting arrangement according to one of the preceding claims, **characterized in that** the torsion bar spring (3) is in the form of a tube.

13. Connecting arrangement according to one of the preceding claims, **characterized in that** the torsion bar spring (3) is mounted on a first vehicle component and the levers (4, 5) are mounted, with a spacing to the torsion bar spring (3), on a second vehicle component, wherein one of the vehicle components is formed by a driver's cab (27) and the other of the vehicle components is formed by a vehicle frame (28).

## Revendications

1. Système de liaison pour un stabilisateur de la cabine de conducteur d'un véhicule, avec deux leviers (4, 5) s'étendant transversalement à une direction longitudinale (y), qui comprennent respectivement un oeillet de palier (6) doté d'un contour périphérique intérieur non rond (7), avec un ressort à barre de torsion (3) s'étendant avec son axe de rotation (2) dans la direction longitudinale (y), qui est doté à chacune de ses deux extrémités (8, 9) d'un contour périphérique extérieur non rond (10) adapté au contour périphérique intérieur (7) de l'oeillet de palier (6) qui lui est associé et est respectivement monté avec celui-ci dans sillet de palier (6), **caractérisé en ce que** les parois (11) des oeillets de palier (6) des deux leviers (4, 5) sont traversées respectivement par au moins une fente (12) s'étendant dans la direction longitudinale (y), par laquelle respectivement deux parties de paroi (13, 14) opposées l'une à l'autre des parois (11) sont séparées l'une de l'autre, dans lequel les parties de paroi (13, 14) sont pressées respectivement par au moins un moyen de serrage détachable contre le contour périphérique extérieur non rond respectif (10) du ressort à barre de torsion (3).

2. Système de liaison selon la revendication 1, **caractérisé en ce que** la fente (12) traverse la paroi (11) respectivement dans une direction s'étendant radialement par rapport à l'axe de rotation (2).

3. Système de liaison selon la revendication 1 ou 2, **caractérisé en ce que** les parties de paroi (13, 14) sont pressées respectivement par le moyen de serrage contre le contour périphérique extérieur (10) du ressort à barre de torsion (3) radialement par rapport à l'axe de rotation (2).

4. Système de liaison selon l'une quelconque des revendications précédentes, **caractérisé en ce que** le moyen de serrage comprend respectivement au moins une vis (16) s'étendant transversalement à la direction longitudinale (y) et disposée à distance de l'axe de rotation (2), au moyen de laquelle les deux parties de paroi (13, 14) sont vissées l'une à l'autre.

5. Système de liaison selon la revendication 4, **caractérisé en ce que** la vis (16) s'étend respectivement à travers une première des parties de paroi (13) et est vissée dans la seconde partie de paroi (14), dans lequel une tête de vis (29) de la vis (16) prend appui sur une face d'appui (18) de la première partie de paroi (13) détournée de la seconde partie de paroi (14).

6. Système de liaison selon la revendication 4 ou 5, **caractérisé en ce que** la vis (16) s'étend respectivement à travers la fente (12).

7. Système de liaison selon l'une quelconque des revendications précédentes, **caractérisé en ce que** la paroi (11) est réalisée respectivement en une seule pièce, de telle manière que les parties de paroi (13, 14) se prolongent l'une dans l'autre.

8. Système de liaison selon l'une quelconque des revendications 1 à 6, **caractérisé en ce que** la paroi (11) est traversée respectivement par au moins deux fentes (12, 19) s'étendant dans la direction longitudinale (y), par lesquelles les parties de paroi (13, 14) sont séparées l'une de l'autre, de telle manière que les parties de paroi (13, 14) forment des composants séparés.

9. Système de liaison selon la revendication 8, **caractérisé en ce que** le moyen de serrage comprend respectivement au moins deux vis (16, 20) s'étendant transversalement à la direction longitudinale (y) et disposées à distance de l'axe de rotation (2), au moyen desquelles les deux parties de paroi (13, 14) sont vissées l'une à l'autre, dans lequel les vis (16, 20) s'étendent à travers les fentes (12, 19).

10. Système de liaison selon la revendication 8 ou 9, **caractérisé en ce que** les fentes (12, 19) traversent la paroi (11) respectivement en des endroits opposés l'un à l'autre par rapport à l'axe de rotation (2).

11. Système de liaison selon l'une quelconque des revendications précédentes, **caractérisé en ce que** les contours non ronds (7, 10) forment respectivement un contour polygonal.

12. Système de liaison selon l'une quelconque des revendications précédentes, **caractérisé en ce que** le ressort à barre de torsion (3) est constitué par un tube.

13. Système de liaison selon l'une quelconque des revendications précédentes, **caractérisé en ce que** le ressort à barre de torsion (3) est supporté sur un premier composant du véhicule et les leviers (4, 5) sont supportés sur un second composant du véhicule à distance du ressort à barre de torsion (3), dans lequel un des composants du véhicule est formé par la cabine de conducteur (27) et l'autre composant du véhicule est formé par un châssis du véhicule (28).
